(19) Europäisches Patentamt
European Patent Office
Office européen des brevets

(11) **EP 4 660 952 A1**

(12) **EUROPEAN PATENT APPLICATION**

(43) Date of publication:
**10.12.2025 Bulletin 2025/50**

(21) Application number: **24305876.5**

(22) Date of filing: **04.06.2024**

(51) International Patent Classification (IPC):
**G06T 13/40** (2011.01)     **G06T 19/20** (2011.01)

(52) Cooperative Patent Classification (CPC):
**G06T 19/20; G06T 13/40;** G06T 2219/2004;
G06T 2219/2024

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **InterDigital CE Patent Holdings, SAS 75017 Paris (FR)**

(72) Inventors:
• **LE CLERC, Francois**
  **35590 L'HERMITAGE (FR)**
• **GOSSELIN, Philippe Henri**
  **35235 THORIGNE-FOUILLARD (FR)**
• **COVA REGATEIRO, João Pedro**
  **35220 CHATEAUBOURG (FR)**
• **AVRIL, Quentin**
  **35830 BETTON (FR)**

(74) Representative: **Vossius & Partner Patentanwälte Rechtsanwälte mbB Siebertstraße 3 81675 München (DE)**

(54) **HAIRSTYLE MODEL FITTING TO AN AVATAR**

(57) Apparatus and methods are disclosed for fitting a hairstyle model to an avatar. Techniques described include obtaining an avatar description, including an avatar mesh; and obtaining a hairstyle description, including a hairstyle model and a hairstyle supporting mesh. Based on the obtained hairstyle supporting mesh, the hairstyle model is fitted to the avatar mesh. Apparatus and methods are also disclosed for generating a scene description. The scene description includes a hairstyle description containing a hairstyle model and a hairstyle supporting mesh, used for the fitting of the hairstyle model to an avatar mesh representing the avatar.

```
┌──────────────────────────────────────────┐
│ OBTAIN AN AVATAR DESCRIPTION, INCLUDING AN │
│            AVATAR MESH                      │
└──────────────────────────────────────────┘
                    │                          1010
                    ▼
┌──────────────────────────────────────────┐
│ OBTAIN A HAIRSTYLE DESCRIPTION, INCLUDING A │
│ HAIRSTYLE MODEL AND A HAIRSTYLE SUPPORTING  │
│               MESH                          │
└──────────────────────────────────────────┘
                    │                          1020
                    ▼
┌──────────────────────────────────────────┐
│ FIT, BASED ON THE HAIRSTYLE SUPPORTING MESH,│
│ THE HAIRSTYLE MODEL TO THE AVATAR MESH      │
└──────────────────────────────────────────┘
                                               1030
```

**FIG. 10**
**1000**

**Description**

BACKGROUND

Scene description formats allow for efficient representations and delivery of scene elements to rendering applications. A common scene description format is the graphics library transmission format (glTF) that enables both designers of digital assets and application developers to generate and to use, respectively, the digital assets. Generally, glTF defines nodes representing (among other scene elements) objects and respective meshes, based on which an application can render the objects at the scene. glTF allows for extensions, such as the MPEG_node_avatar extension introduced by the MPEG-I Scene Description (SD) format to define an avatar object. To customize the appearance of an avatar, hairstyle catalogs are available to a user the avatar represents. However, meshes representing avatars and hairstyle models available from such catalogs are typically independently generated, and thus a hairstyle selected by a user to customize his or her avatar may not geometrically fit the avatar mesh. Techniques for fitting a hairstyle model to an avatar model are needed as well as hairstyle description format to facilitate such fitting.

SUMMARY

Aspects disclosed in the present disclosure describe methods for fitting a hairstyle model to an avatar. The methods comprise obtaining an avatar description, including an avatar mesh; and obtaining a hairstyle description, including a hairstyle model and a hairstyle supporting mesh. Based on the obtained hairstyle supporting mesh, the hairstyle model is fitted to the avatar mesh. Aspects disclosed in the present disclosure also describe methods for generating a scene description. The methods comprise generating a hairstyle description, including a hairstyle model and a hairstyle supporting mesh, where the hairstyle supporting mesh is used for the fitting of the hairstyle model to an avatar mesh representing the avatar.

Aspects disclosed in the present disclosure describe apparatuses for fitting a hairstyle model to an avatar. The apparatuses comprise at least one processor and memory storing instructions. The instructions, when executed by the at least one processor, cause the apparatuses to obtain an avatar description, including an avatar mesh; and to obtain a hairstyle description, including a hairstyle model and a hairstyle supporting mesh. Based on the obtained hairstyle supporting mesh, the hairstyle model is fitted to the avatar mesh. Aspects disclosed in the present disclosure describe apparatuses for generating a scene description. The apparatuses comprise at least one processor and memory storing instructions. The instructions, when executed by the at least one processor, cause the apparatuses to generate a hairstyle description, including a hairstyle model and a hairstyle supporting mesh, where the hairstyle supporting mesh is used for the fitting of the hairstyle model to an avatar mesh representing the avatar.

Aspects disclosed in the present disclosure describe a non-transitory computer-readable medium comprising instructions executable by at least one processor to perform methods for fitting a hairstyle model to an avatar. The methods comprise obtaining an avatar description, including an avatar mesh; and obtaining a hairstyle description, including a hairstyle model and a hairstyle supporting mesh. Based on the obtained hairstyle supporting mesh, the hairstyle model is fitted to the avatar mesh. Aspects disclosed in the present disclosure also describe a non-transitory computer-readable medium comprising instructions executable by at least one processor to perform methods for generating a scene description. The methods comprise generating a hairstyle description, including a hairstyle model and a hairstyle supporting mesh, where the hairstyle supporting mesh is used for the fitting of the hairstyle model to an avatar mesh representing the avatar.

This Summary is provided to introduce a selection of concepts in a simplified form that is further described below in the Detailed Description. This Summary is not intended to identify key features or essential features of the claimed subject matter, nor is it intended to be used to limit the scope of the claimed subject matter. Furthermore, the claimed subject matter is not limited to limitations that solve any or all disadvantages noted in any part of this disclosure.

BRIEF DESCRIPTION OF THE DRAWINGS

FIG. 1 is a block diagram of an example system, according to aspects of the present disclosure.

FIG. 2 is a diagram illustrating mesh representations of avatars, according to aspects of the present disclosure.

FIG. 3 is a diagram illustrating finding correspondences between meshes, according to aspects of the present disclosure.

FIG. 4 is a diagram illustrating a strand-based hairstyle model, according to aspects of the present disclosure.

FIG. 5 is a diagram illustrating a strand-based hairstyle model augmented by a hairstyle supporting mesh, according to aspects of the present disclosure.

FIG. 6 is a diagram illustrating the fitting of a strand to the surface of a target avatar mesh, according to aspects of the present disclosure.

FIG. 7 is a diagram illustrating the representation of a location inside a triangle using barycentric coordinates, according to aspects of the present disclosure.

FIG. 8 is a flow diagram of an example method for the parsing of the "MPEG_node_strand_hairstyle" extension, according to aspects of the present disclosure.

FIG. 9 is a flow diagram of an example method for fitting a hairstyle model to an avatar to be rendered, according to aspects of the present disclosure.

FIG. 10 is a flow diagram of an example method for fitting a hairstyle model to an avatar, according to aspects of the present disclosure.

FIG. 11 is a diagram of an example method for generating a scene description, according to aspects of the present disclosure.

DETAILED DESCRIPTION

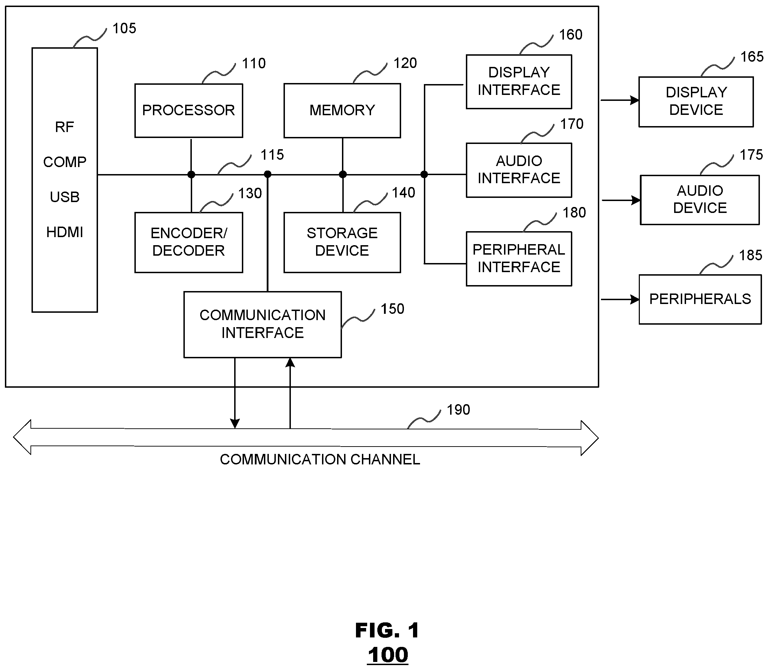

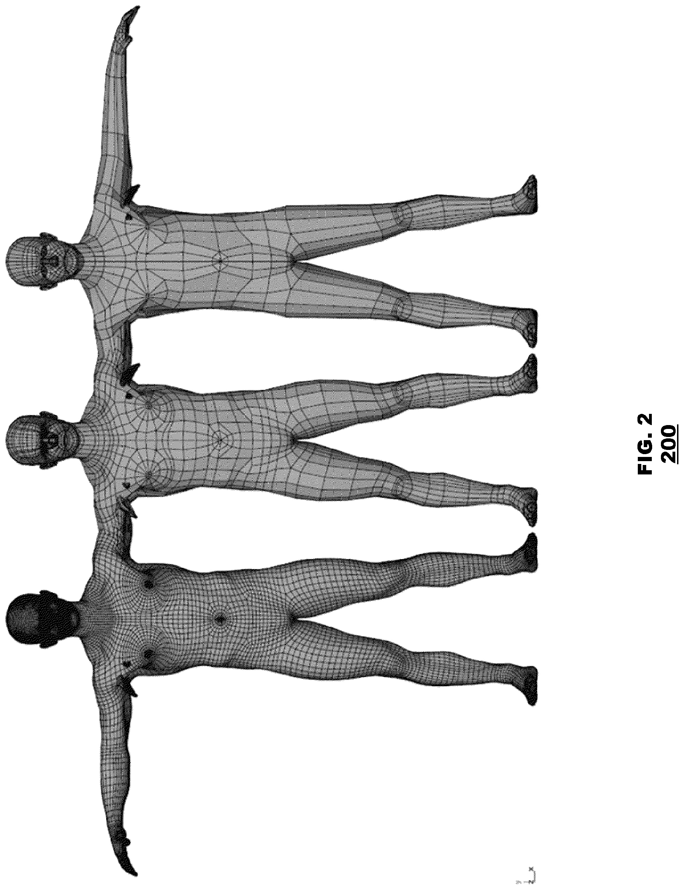

Apparatuses and methods are presented herein for fitting a hairstyle model to an avatar model and for generating a scene description to facilitate the fitting. A system for processing and displaying content, with which various aspects and examples described herein may be implemented, is generally described in reference to FIG. 1, followed by a description of the aspects of the present disclosure in reference to FIGS. 2-11.

FIG. 1 illustrates a block diagram of an example system 100. System 100 can be embodied as a device including the various components described below and can be configured to perform one or more of the aspects described in this application. Examples of such devices, include, but are not limited to, various electronic devices such as personal computers, laptop computers, smartphones, tablet computers, digital multimedia set-top boxes, digital television receivers, personal video recording systems, connected home appliances, and servers. Elements of system 100, singly or in combination, can be embodied in a single integrated circuit, multiple integrated circuits, and/or discrete components. For example, in at least one embodiment, the processing and encoder/decoder elements of system 100 are distributed across multiple integrated circuits and/or discrete components. In various embodiments, the system 100 is communicatively coupled to other systems, or to other electronic devices, via, for example, a communications bus or through dedicated input and/or output ports. In various embodiments, the system 100 is configured to implement one or more of the aspects described in this application.

The system 100 includes at least one processor 110 that can be configured to execute instructions loaded therein for implementing, for example, the various aspects described in this application. Processor 110 can include embedded memory, input and output interfaces, and various other circuitries as known in the art. The system 100 includes at least one memory 120 (e.g., a volatile memory device and/or a non-volatile memory device). System 100 includes a storage device 140, which can include non-volatile memory and/or volatile memory, including, for example, EEPROM, ROM, PROM, RAM, DRAM, SRAM, flash, magnetic disk drives, and/or optical disk drives. The storage device 140 can be an internal storage device, an attached storage device, and/or a network accessible storage device, for example.

System 100 includes an encoder/decoder module 130 configured to process data to provide encoded video data or decoded video data. The encoder/decoder module 130 can include its own processor and memory. The encoder/decoder module 130 represents module(s) that can be included in a device to perform encoding and/or decoding functions. Additionally, the encoder/decoder module 130 can be implemented as a separate element of system 100 or can be incorporated within processor 110 as a combination of hardware and software as known to those skilled in the art.

Program code that is to be loaded into processor 110 or into encoder/decoder 130 to perform the various aspects described in this application can be stored in a storage device 140 and subsequently loaded into memory 120 for execution by processor 110. In accordance with various embodiments, one or more of processor 110, memory 120, storage device 140, and encoder/decoder module 130 can store one or more of various items during the performance of the processes described in this application. Such stored items can include, but are not limited to, the input video, the decoded video or portions of the decoded video, the bitstream, matrices, variables, and intermediate or final results from the processing of equations, formulas, operations, and operational logic.

In several embodiments, memory inside of the processor 110 and/or the encoder/decoder module 130 is used to store instructions and to provide working memory for processing functions that are needed during encoding or decoding. In other embodiments, however, memory external to the processing device (where, for example, the processing device can be either the processor 110 or the encoder/decoder module 130) can be used for one or more of these functions. The external memory can be the memory 120 and/or the storage device 140 that may comprise, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for video coding and decoding operations.

The input to the elements of system 100 can be provided through various input devices as indicated in block 105. Such input devices include, but are not limited to, (i) an RF portion that receives an RF signal transmitted, for example, over the air by a broadcaster, (ii) a Composite input terminal (COMP), (iii) a USB input terminal, and/or (iv) an HDMI input terminal.

In various embodiments, the input devices of block 105 have associated respective input processing elements as known in the art. For example, the RF portion can be associated with elements suitable for (i) selecting a desired frequency (also referred to as selecting a signal, or band-limiting a signal to a band of frequencies), (ii) down-converting the selected signal, (iii) band-limiting again to a narrower band of frequencies to select, for example, a signal frequency band which can be referred to as a channel in certain embodiments, (iv) demodulating the down converted and band-limited signal, (v) performing error correction, and (vi) demultiplexing to select the desired stream of data packets. The RF portion of various embodiments includes one or more elements that perform these functions, for example, frequency selectors, signal selectors, band-limiters, channel selectors, filters, downconverters, demodulators, error correctors, and demultiplexers. The RF portion can include a tuner that performs some of these functions, including, for example, down-converting the received signal to a lower frequency (for example, an intermediate frequency or a near-baseband frequency) or to a baseband. In one set-top box embodiment, the RF portion and its associated input processing element receive an RF signal transmitted over a wired (for example, cable) medium, and perform frequency selection by filtering, down-converting, and filtering again to a desired frequency band. Various embodiments rearrange the order of the above-described (and other) elements, remove some of these elements, and/or add other elements performing similar or different functions. Added elements can include inserting elements in between existing elements, for example, inserting amplifiers and an analog-to-digital converter. In various embodiments, the RF portion includes an antenna.

Additionally, the USB and/or HDMI terminals can include respective interface processors for connecting system 100 to other electronic devices across USB and/or HDMI connections. It is to be understood that various aspects of input processing, for example, Reed-Solomon error correction, can be implemented, for example, within a separate input processing integrated circuit or within processor 110 as necessary. Similarly, aspects of USB or HDMI interface processing can be implemented within separate interface integrated circuits or within processor 110 as necessary. The demodulated, error corrected, and demultiplexed stream is provided to various processing elements, including, for example, processor 110, and encoder/decoder 130 operating in combination with the memory and storage elements to process the datastream as necessary for presentation on an output device.

Various elements of system 100 can be provided within an integrated housing. Within the integrated housing, the various elements can be interconnected and transmit data therebetween using a suitable connection arrangement 115, for example, an internal bus as known in the art, including the I2C bus, wiring, and printed circuit boards.

The system 100 includes a communication interface 150 that enables communication with other devices via communication channel 190. The communication interface 150 can include, but is not limited to, a transceiver configured to transmit and to receive data over communication channel 190. The communication interface 150 can include, but is not limited to, a modem or network card. The communication channel 190 can be implemented, for example, within a wired and/or a wireless medium.

Data are streamed to the system 100, in various embodiments, using a Wi-Fi network such as IEEE 802.11. The Wi-Fi signal of these embodiments is received over the communication channel 190 and the communication interface 150 which are adapted for Wi-Fi communications. The communication channel 190 of these embodiments is typically connected to an access point or router that provides access to outside networks including the Internet for allowing streaming applications and other over-the-top communications. Other embodiments provide streamed data to the system 100 using a set-top box that delivers the data over the HDMI connection of the input block 105. Still other embodiments provide streamed data to the system 100 using the RF connection of the input block 105.

The system 100 can provide an output signal to various output devices, including a display device 165, an audio device (e.g., speaker(s)) 175, and other peripheral devices 185. The other peripheral devices 185 include, in various examples of embodiments, haptic devices, one or more of a stand-alone DVR, a disk player, a stereo system, a lighting system, and other devices that provide a function based on the output of the system 100. In various embodiments, control signals are communicated between the system 100 and the display device 165, the audio device 175, or other peripheral devices 185 using signaling such as AV.link, CEC, or other communication protocols that enable device-to-device control with or without user intervention. The output devices can be communicatively coupled to system 100 via dedicated connections through respective interfaces 160, 170, and 180. Alternatively, the output devices can be connected to system 100 using the communication channel 190 via the communication interface 150. The display device 165 and the audio device 175 can be integrated in a single unit with the other components of system 100 in an electronic device, for example, a television. In various embodiments, the display interface 160 includes a display driver, for example, a timing controller (T Con) chip.

The display device 165 and the audio device 175 can alternatively be separate from one or more of the other components, for example, if the RF portion of input 105 is part of a separate set-top box. In various embodiments in which the display device 165 and the audio device 175 are external components, the output signal can be provided via dedicated output connections, including, for example, HDMI ports, USB ports, or COMP outputs.

Aspects of the present disclosure can be used to enhance the customization of avatars rendered in a virtual environment. Such avatars are graphical characters that serve as proxies for their users when immersing in a metaverse framework for instance. Thus, to experience the virtual environment, the users may interact with each other through their avatars and/or with real world objects that may be viewed as is or by their representations in the virtual environment.

For example, a metaverse framework may create an immersive shopping experience provided to users by a computer-generated virtual environment including a virtual shop located at a virtual street. An avatar can be directed by the user it represents (e.g., by means of a game console or by pressing keys on a computer keyboard) to walk along the virtual street and enter the virtual shop. The virtual shop represents a store owned by a retail company. The display on the user's computer screen is updated live to reflect the position and viewpoint of the avatar in the virtual environment. When the avatar enters the virtual shop, the user can view the virtual representation of goods for sale. The user can navigate his or her avatar through the aisles of the virtual shop and select goods to buy. Typically, the selected goods are also sold in brick-and-mortar stores owned by the retail company. When the avatar exits the virtual shop, the user is asked to pay for the selected goods. The payment is performed in the real world, for instance by means of the user's credit card. When the payment is acknowledged, the user gets the goods delivered to his or her home by the retail company. To increase the immersive experience, the user may view other avatars concurrently present in the virtual shop (of other users that are either customers or shop employees) and may interact with them. Such a metaverse framework provides an attractive immersive alternative to the more conventional on-line shopping as provided by an e-commerce website.

FIG. 2 is a diagram illustrating mesh representations of avatars 200. In the example of FIG. 2, the avatars are human characters (i.e., human avatars), but other characters (e.g., robotic avatars) may be available to the user to choose from depending on the application of the metaverse framework. These mesh representations 200 have different levels of detail (See, MPEG-I Scene Description standard, annex H of ISO/IEC 23090-14 DAM 2: Support for Haptics, Augmented Reality, Avatars, Interactivity, MPEG-I Audio, and Lighting).

Generally, a mesh is defined by a set of 3D vertices connected by edges. The vertices and edges define polygonal faces (e.g., triangles) that together form the surface of the mesh. Thus, the polygonal faces of the mesh serve as a geometrical model of the avatar it represents. The count of vertices on the mesh and their surface locations with respect to semantic salient points (such as mouth corners or elbow tips for a human avatar) define the topology of the mesh. In other words, the mesh topology defines how the surface it represents is sampled. For instance, a mesh topology for a human avatar may impose that the contour of the lips be sampled using a fixed number of vertices positioned at regularly spaced intervals along the contour, with vertices located at the lips' corners.

For a given mesh topology, the positions in the 3D space of the mesh vertices define the shape of the mesh - that is, the morphology of the character it represents. To illustrate the difference between topology and morphology, consider several meshes of approximately the same scale and size representing human characters, where all these meshes share the same topology. This topology may impose that all of these meshes have two vertices positioned at the two corners of the lips. However, the relative 3D positions of these two vertices may differ across characters to reflect morphological (shape) differences in the widths of their mouths.

When two meshes represent analogous objects (or the same object but with different poses and/or sizes), often, there is a need to geometrically align the two meshes, using shape matching. Shape matching refers to the task of finding correspondences between surface points on two meshes $M$ and $M'$. These two meshes, although representing analogous objects may have different topologies and/or different morphologies - that is, a different number of vertices, located at different relative 3D positions, and/or different edge connections between the vertices. The task of matching $M$ to $M'$ can be formulated as follows: for each vertex on $M$ (that is associated with a physical location on the surface of the object that $M$ is representing) find the corresponding point on the mesh surface of $M'$ (that is associated with the same physical location on the surface of the object that $M'$ is representing). Note that the set of corresponding points on the mesh surface of $M'$, obtained for all respective vertices on $M$, provides a resampling of $M'$ according to the topology of $M$.

For example, consider the alignment of two meshes $M$ and $M'$ - mesh $M$ represents the surface of a first human face and mesh $M'$ represents the surface of a second human face. Mesh $M$ may have a vertex V that is associated with a physical location (i.e., the outer corner of the right eye of the first human face). A shape matching method would then provide the corresponding point on the surface of mesh $M'$ that is associated with the same physical location (i.e., the outer corner of the right eye of the second human face). That corresponding point most likely will not fall on a vertex of mesh $M'$. However, finding the corresponding points for all the vertices of mesh $M$ provides a new sampling of the surface of mesh $M'$, and these found corresponding points can serve as new vertices for mesh $M'$ that follow the same topology as the vertices of mesh $M$.

Typically, the matching process begins with a coarse alignment that is initially applied to coarsely align the two meshes. This coarse alignment is followed by a refinement step that compensates for local differences. The coarse alignment can be achieved by applying a global transformation (e.g., a rigid transformation) that spatially brings together the two meshes into the same size, the same position, and the same orientation. Then, the refinement step can be achieved by applying a local transformation.

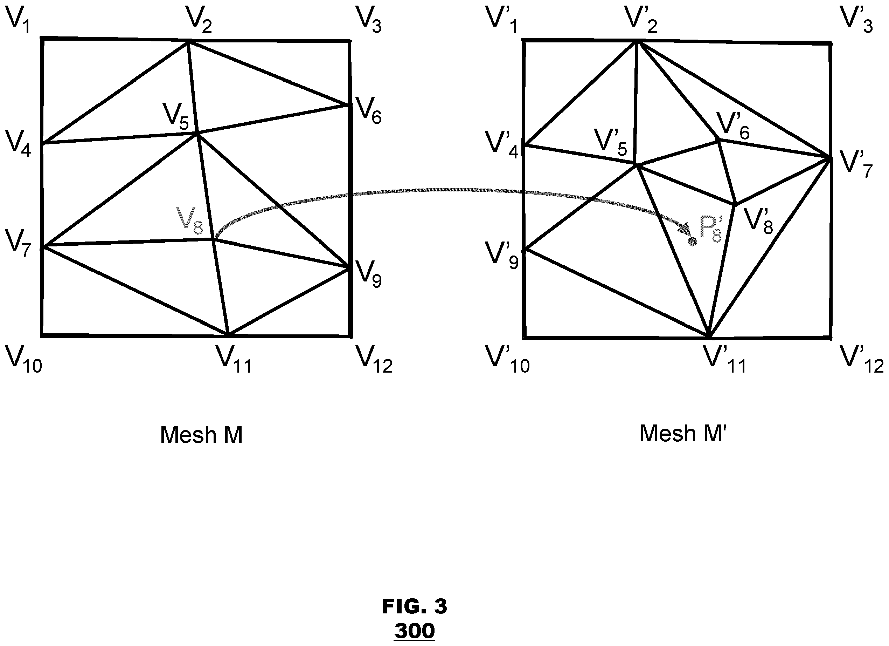

Hence, the coarse alignment of two meshes can be performed by spatially mapping one mesh to the other using a rigid 3D transformation. A rigid 3D transformation may include a 3D translation, a 3D scaling, and a 3D rotation. The application of this transformation to mesh $M$ brings its vertices (on average) as close as possible to the vertices of $M'$. Finding the rigid 3D transformation can start with finding the 3D scaling component. Often the 3D scaling can be limited to a uniform scaling, where the same scaling factor is used for all three axes of the 3D coordinate system (e.g., can be estimated based on the ratio between size measurements of $M$ and $M'$). After aligning $M$ to $M'$ based on the 3D scaling, the residual 3D rotation and 3D translation that further align $M$ to $M'$ can be computed using, for example, the Iterative Closest Point (ICP) algorithm (see, e.g., https://en.wikipedia.org/wiki/Iterative_closest_point). Following this coarse alignment, a refinement step can be applied to locally find correspondences, that is, to find points on the surface of $M'$ that correspond to respective vertices of $M$, as explained above. This refinement step is further illustrated by FIG. 3.

FIG. 3 is a diagram illustrating finding correspondence between meshes 300. In the example of FIG. 3, there are a planar square mesh $M$, consisting of 12 vertices $V_1$ through $V_{12}$ that are connected by edges, and a planar square Mesh $M'$, consisting of 12 vertices $V'_1$ through $V'_{12}$ that are differently connected by edges. As shown, mesh $M$ and mesh $M'$ represent the same object (i.e. a square), but with different topologies as these meshes do not sample the object at the same surface locations and do not have the same connectivity. For instance, there is no vertex in mesh $M'$ at the location of vertex $V_8$ in mesh $M$. Since $M$ and $M'$ represent the same object, the relative location of vertex $V_8$ to the corners of the object ($V_1$, $V_3$, $V_{12}$, $V_{10}$) in mesh $M$ should be the same as the relative location of its corresponding point to the corners of the square ($V'_1$, $V'_3$, $V'_{12}$, $V'_{10}$) in mesh $M'$. In FIG. 3, this corresponding point is denoted by $P'_8$. Thus, vertex $V_8$ on Mesh $M$ maps to position $P'_8$ on Mesh $M'$. The position of $P_8$ on mesh $M$ may be expressed relative to the vertices of the triangle ($V'_5$, $V'_8$, $V'_{11}$) it resides in.

More generally, matching the shape of $M$ to $M'$ can be performed by mapping each vertex $V_i$ of mesh $M$ to a corresponding position $P'_i$ on the surface of mesh $M'$. A technique for finding point correspondence is described, for example, by N. Verma, et al., "FeaStNet: Feature-Steered Graph Convolutions for 3D Shape Analysis," proceedings of the 2018 IEEE International Conference on Computer Vision and Pattern Recognition. Note that shape matching does not require the shapes being matched to be identical, but preferably related. For example, the shapes of analogous objects - such as two human faces of different persons or of the same person at different ages - can be matched to detect differences between the two.

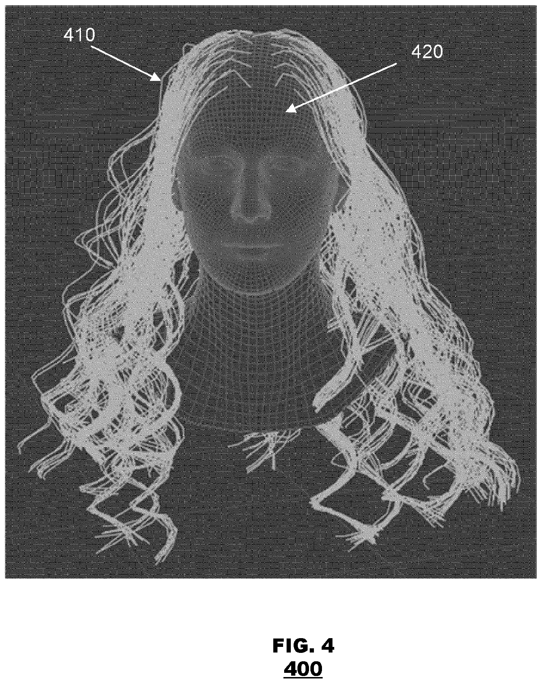

As mentioned above, an avatar is selected by a user to expressively represent the user in a virtual world. The realism of the avatar can be further enhanced by selecting a hairstyle. While the body of a human character has a smooth surface that can be well modelled by a polygonal mesh, meshes are not appropriate for modeling hair. This is because hair is a collection of thin intertwined strands that naturally do not form a smooth surface. At best, a mesh geometry can be used to model the outer surface of the hair and the associated texture to collectively represent the hair strands, but this is acceptable only for low-fidelity character rendering. For a more realistic representation, the geometry of the avatar hair can be modelled as a collection of 3D curves anchored on the avatar (typically, head) mesh, where each curve represents an individual strand. However, to limit the volume of data in such representation, the model can be limited to a smaller number of strands, so-called guide curves (or guide strands). A guide curve often represents the geometry of a wisp of hair, as illustrated in FIG. 4.

FIG. 4 is a diagram illustrating a strand-based hairstyle model 400. In the Example of FIG. 4, wisps of hair are represented by respective guide curves 410 attached to the avatar mesh 420. Note that for clarity, only those guide curves are shown. Additional strands can be modelled relative to each of the guide curves. A renderer can reconstruct the additional strands, reconstructing as many strands as time or computational complexity permit. The reconstruction can be performed by interpolating new strands in-between the guide curves originating from the surface of the avatar mesh. In this process, the shape of the interpolated strands is a function of the shapes of the nearest guide curves.

The graphics library transmission format (glTF) standardizes the representation of basic geometry, texture, and animation of an avatar (as described in the "Khronos glTF specification for the efficient transmission and loading of 3D scenes and models by engines and applications," see https://www.khronos.org/gltf/). glTF representations are encoded in JSON scene descriptions that consist of data objects. Each object may contain one or more properties that are each defined by a pair of a key and a value. glTF includes properties that describe a triangular mesh. glTF also includes properties that describe a set of 3D curves that may be used to represent a hairstyle by defining either the full set of hair strands or a representative set of guide curves. However, glTF supports neither the description of the semantics of the hairstyle nor the specification of the way the hairstyle is to be bound (fitted) to the avatar mesh.

The MPEG-I Scene Description (MPEG-I SD) standard (see ISO/IEC 23090-14) extends glTF to better support immersive media applications where the user navigates in 3D virtual environments. Amendment 2 of MPEG-I SD, specified in ISO/IEC 23090-14 CDAM 2 "Support for Haptics, Augmented Reality, Avatars, Interactivity, MPEG-I Audio, and Lighting," defines a specialization of a glTF node for avatars through the "MPEG_node_avatar" extension of the glTF node object. The "MPEG_node_avatar" extension adds avatar-specific descriptive elements to the properties provided by glTF for describing the geometry, texture, and animation of digital human characters. However, MPEG-I SD does not standardize any descriptors for the hairstyle of an avatar.

A desirable feature of an avatar representing a user in a virtual environment is that the appearance of the avatar can be customized. For example, a user may want to be able to choose the hairstyle of his or her avatar from a catalog of possible hairstyles. Such a feature requires separate models to be provided, a model for the avatar and a model for the hairstyle, as well as a mechanism for fitting the hairstyle model to the avatar model. However, the geometry of a hairstyle model may not be compatible with the geometry of the avatar model. Indeed, a strand-based hairstyle model is tailored to a given morphology of a region of the avatar mesh (e.g., the head) to which the roots of its strands are to be anchored.

Typically, a catalog of hairstyles (e.g., provided by a platform or an application for avatar customization) is designed for a predetermined head shape that is generally different from the shape of the user's avatar head (e.g., independently created on a different platform or a 3D asset creation tool). Therefore, a mechanism to fit the geometry of a hairstyle to the geometry of an avatar at a region where the hairstyle is to be bound is needed. To that end, a description of a strand-based hairstyle model (referred to herein also as a hairstyle model) is presented herein according to aspects. The description can be used to bind the hairstyle model to an avatar model by a platform or an application rendering the avatar in a virtual world.

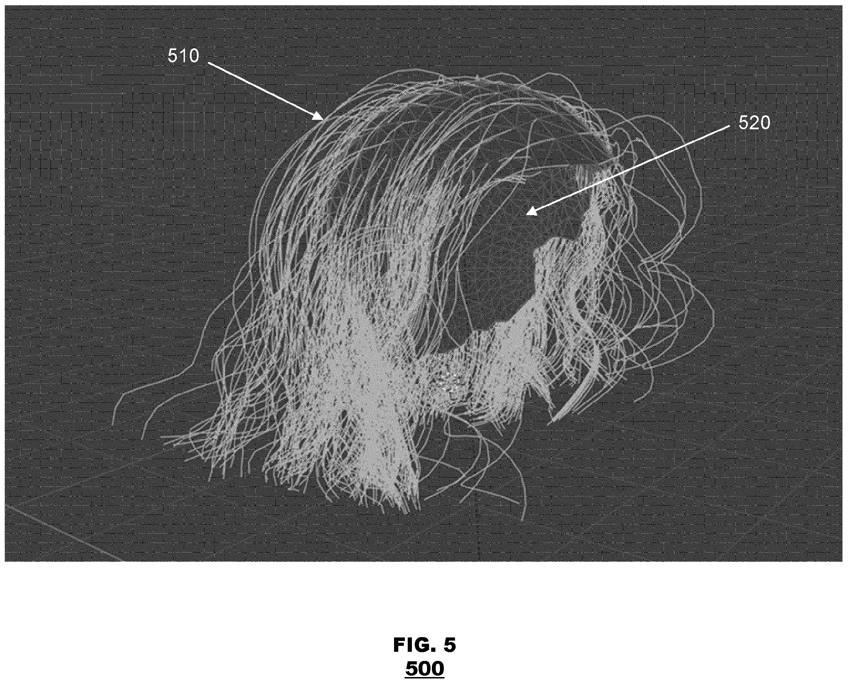

FIG. 5 is a diagram illustrating a strand-based hairstyle model augmented by a hairstyle supporting mesh 500. As shown in the example of FIG. 5, the hairstyle model includes a collection of 3D curves 510 and a hairstyle supporting mesh 520. The hairstyle supporting mesh 520 represents the surface onto which the roots of the hair strands are connected. In an aspect, the collection of 3D curves 510 may represent all the strands in the hairstyle. In another aspect, the collection of 3D curves 510 may represent guide curves. The guide curves can be used to generate other strands in the hairstyle by interpolation. One of the extremities of each of the 3D curves represents the root end which is anchored to the hairstyle supporting mesh. As mentioned above, generally, the shape of the hairstyle supporting mesh 520 is different from the shape of the target region on the avatar mesh. Hence, a fitting mechanism is needed - that is, the shape of the hairstyle supporting mesh 520 needs to be mapped (fitted) to the shape of the target region. In order to facilitate this fitting, aspects herein enrich the description of the hairstyle model with a hairstyle supporting mesh on whose surface the roots of the hairstyle strands are anchored.

According to aspects, a hairstyle supporting mesh of a hairstyle model can be registered to an avatar mesh. This registration provides corresponding locations on the surface of the avatar mesh for respective roots of strands (3D curves) from the hairstyle model. In other words, registration of the hairstyle supporting mesh to the avatar mesh facilitates the mapping of a root located at the hairstyle supporting mesh to a corresponding location on the avatar mesh. As applied herein, the avatar mesh may refer to any target region on the avatar mesh that supports hair (such as, but not limited to, the head).

To register the hairstyle supporting mesh to the avatar mesh, first, the hairstyle supporting mesh may be coarsely aligned to the avatar mesh using a rigid transformation. The rigid transformation compensates for global differences in position, scale, and rotation between the two meshes. Following this coarse alignment, the hairstyle supporting mesh shares the same position, scale, and orientation with the avatar mesh; but, still, these meshes do not match locally due to differences in shape. To compensate for these differences, local alignment of the hairstyle supporting mesh to the avatar mesh may be performed, as described below.

According to aspects, to find a corresponding location R' (on the surface of the avatar mesh, denoted by $M'$) to a strand root at location R (on the surface of the hairstyle supporting mesh, denoted by $M$), the following steps can be carried out by a mesh registration tool.

In a first step, based on the described above alignment between meshes (see description in reference to FIG. 3), a corresponding point $P'_i$ on the surface of the avatar mesh $M'$ is determined for a vertex $P_i$ of the hairstyle supporting mesh $M$. In particular, the mapping between the set of vertices $\{Pi\}$ that forms the polygon that encloses a strand root location R and the corresponding set of points $\{P'_i\}$ on the surface of the avatar mesh is determined, that is, $\{Pi\} \rightarrow \{P'_i\}$.

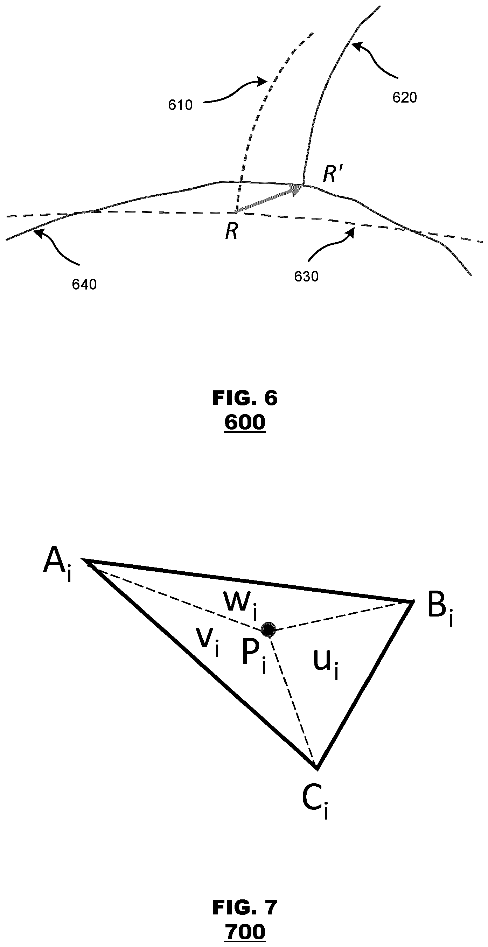

Then, in a second step, the location R of the strand root is determined with respect to the vertices of the polygon it resides in $\{Pi\}$. If the hairstyle supporting mesh is a triangular mesh, the determination of this location can be obtained as a set of barycentric coordinates (as explained in reference to FIG. 7). Formally, if $\{Pi\}$ is the set of vertices of the triangle of $M$ that encloses the strand root location R, the location R can be determined as:

$$R = \sum_{i=1}^{3} \alpha_i P_i, \qquad\qquad (1)$$

where $\{\alpha i\}$ is the set of barycentric coordinates. Barycentric coordinates are non-negative and sum to 1.

In a third step, the location $R'$ that corresponds to location R is determined as:

$$R' = \sum_{i=1}^{3} \alpha_i P'_i, \qquad\qquad (2)$$

where $\{P'_i\}$ are corresponding locations to vertices $\{Pi\}$ (as obtained in the first step) and where $\{\alpha i\}$ is the set of barycentric coordinates (as obtained in the second step).

FIG. 6 is a diagram illustrating the fitting of a hair strand to the surface of a target avatar mesh 600. In the example of FIG. 6, a curve representing a section 630 of the hairstyle supporting mesh and a curve representing a section 640 of the avatar mesh are shown. As demonstrated, these sections 630, 640 are already coarsely aligned (e.g., using anon-rigid transformation as described herein). And so, the two sections have approximately the same position, scale, and orientation in the 3D space. The root (one extremity) of a strand 610 of the hairstyle model is attached to the hairstyle supporting mesh at location R. The location corresponding to R on the avatar mesh, R', is determined by the steps above (as described in reference to equations (1) and (2)). Thus, fitting the strand 610 to the avatar mesh is achieved by translating it by vector $dR = R' - R$, resulting in the translated strand 620. This process is repeated for all the strands of the hairstyle model.

The representation of a hairstyle model, extended herein according to aspects, is described in detail below. This presentation is compliant with the MPEG-I Scene Description format, but its meaning and use are generic, and so it can be encoded using any other scene description format, such as XML or USD.

A strand-based hairstyle model can be described by a glTF "node." The "node" has a "mesh" property that references a "mesh" object specifying the hairstyle model as a collection of polyline primitives that define respective 3D curves representing hair strands. Accordingly, the "mode" properties of these primitives is set to LINE_STRIP. According to the glTF specification, a mesh primitive may include attributes that describe the vertex attributes used for drawing the mesh. The POSITION attribute of each polyline primitive defines the *X, Y, Z* coordinates of its control vertices in 3D space. The color of the hairstyle may be specified either through the COLOR_n attribute of the strand primitives, or through a TEXCOORD_n attribute and a material object that specify respectively a UV map for texture coordinates and a texture. The "name" property of the "node" that describes the hairstyle model may be used to describe the hairstyle. For example, it may refer to a hairstyle category such as "mullet" or to the name of a celebrity often wearing this hairstyle.

According to the glTF specification, the hairstyle model may be specified as a "node" holding a "mesh" property. This "mesh" holds a collection of polyline primitives describing the 3D strands or guide strands making up the hairstyle, as described above. The hairstyle model "node" is extended herein by an "MPEG_node_strand_hairstyle" extension. This "MPEG_node_strand_hairstyle" extension specifies a hairstyle supporting mesh and other properties, such as those listed in Table 1 and described below.

Table 1: The "MPEG_node_strand_hairstyle" extension properties.

| Name | Type | Required | Description |
|---|---|---|---|
| supporting Mesh | int | Yes | Index in the "meshes" array of the scene description of the mesh supporting the hair strand roots. |
| rootToTip | boolean | No | True if the first vertex of the curve representing the strand is the root of the strand, false if it is the tip. Default is true. |
| landmarks | HairstyleLandmarks | No | Specification of scalp landmarks to facilitate the registration of supportingMesh to a target avatar mesh. |

The "supportingMesh" property describes the hairstyle supporting mesh 520. It references the index of the hairstyle supporting mesh in the "meshes" array of the scene description. This mesh may hold a primitive that encodes the hairstyle supporting mesh as a triangular mesh. Hence, to comply with version 2.0 of the glTF specification, the "mode" property of this primitive must be set to TRIANGLES, TRIANGLE_STRIP, or TRIANGLE FAN. As explained herein, the benefit of introducing the "supportingMesh" property is that it facilitates the fitting of the hairstyle - that is, hair strands attached at their roots to the hairstyle supporting mesh - to the target avatar mesh, without setting any limits on the topology and morphology of the hairstyle supporting mesh and the avatar mesh.

The order of the control vertices of the 3D curves making up the hairstyle model is assumed to follow the direction of each strand. Their positions are encoded in the POSITION attributes of the curve primitives making up the "mesh" held by the hairstyle "node." The ordering of the control vertices in each strand is specified using the "rootToTip" property of the "MPEG_node_strand_hairstyle" extension. When this attribute is set to true (default), the first vertex in the buffer pointed to by the POSITION attribute of a strand primitive corresponds to the root of the strand, otherwise it corresponds to the tip.

To further facilitate the registration of the hairstyle supporting mesh to the target avatar mesh, landmark correspondences describing the anchoring of the hairstyle geometry on the avatar mesh may optionally be provided through the "landmarks" property of the "MPEG_node_strand_hairstyle" extension. This property is specified as an instance of the "HairstyleLandmarks" object, as defined in Table 2.

Table 2: The "HairstyleLandmarks" type properties.

| Name | Type | Required | Description |
|---|---|---|---|
| avatarFormat | string | Yes | URN specifying the avatar representation scheme, as defined in MPEG_node_avatar.type |
| avatar LandmarkSet | string | Yes | Name of the landmark set in the avatarFormat that specifies anchors on the region of the avatar mesh |
| avatarAnchors | integer[1-*] | Yes | Indices of the landmarks in the avatarLandmarkSet that define anchor positions on the avatar mesh |
| hairstyleAnchors | integer[1-*] | Yes | Indices of the vertices of the hairstyle supporting mesh that correspond to the landmarks indexed by the avatarAnchors |

The landmark correspondences include pairs of corresponding anchor locations on the hairstyle supporting mesh and on the target avatar mesh. The "hairstyleAnchors" property specifies anchor locations on the hairstyle supporting mesh as an array of indices of the hairstyle supporting mesh vertices. The corresponding anchor locations on the avatar mesh are specified using the "avatarFormat," "avatarLandmarkSet," and "avatarAnchors" properties. The "avatarFormat" is a URN that specifies an avatar representation scheme, as defined in the "type" property of the "MPEG_avatar_node" extension in MPEG-I SD. The reference avatar representation scheme in MPEG-I SD is documented in annex H of the text of ISO/IEC 23090-14 DAM 2: "Support for Haptics, Augmented Reality, Avatars, Interactivity, MPEG-I Audio, and Lighting." This representation scheme specifies a numbered list of facial landmarks through an illustrative figure showing the positions of the landmarks on a template face mesh. Similar to this specification, the URN referenced by "avatarFormat" provides the description of an ordered set of landmarks, including landmarks positioned on the scalp region of the avatar mesh. The "avatarLandmarkSet" specifies the name of this landmark set in the document referenced by the URN (e.g., "scalp landmarks"). And, the "avatarAnchors" specifies the indices of the landmarks in this set that correspond to the landmarks on the hairstyle supporting mesh specified by the "hairstyleAnchors" property. Thus, the "avatarAnchors" and "hairstyleAnchors" arrays must be index-aligned.

The landmark positions may be specified using barycentric coordinates. When the avatar mesh of a reference avatar model is a triangular mesh (i.e., all the faces of the mesh are triangles), the anchors in the "hairstyleAnchors" attribute may alternatively be described as barycentric coordinates in a triangle of the avatar mesh (e.g., instead of vertex indices). This allows a more accurate specification of the positions of these landmarks on the surface of the hairstyle supporting mesh, and as a result a more accurate match to the positions of the landmarks defined on the avatar mesh.

FIG. 7 is a diagram illustrating the representation of a location inside a triangle using barycentric coordinates. Therein, a point $P_i$ on the surface of a triangular mesh is located inside a triangle $(A_i, B_i, C_i)$. The location of $P_i$ inside $(A_i, B_i, C_i)$ is specified using barycentric coordinates $(u_i, v_i, w_i)$, such that $P_i = u_i A_i + v_i B_i + w_i C_i$; $u_i$, $v_i$ and $w_i$ are non-negative; and $u_i + v_i + w_i = 1$. Let $S_i$ denotes the area of the triangle $(A_i, B_i, C_i)$. Then it can be shown that $u_i$ is the area of triangle $(P_i, B_i, C_i)$ divided by $S_i$ and, similarly, $v_i$ is the area of triangle $(A_i, P_i, C_i)$ divided by $S_i$, and $w_i$ the area of triangle $(A_i, B_i, P_i)$ divided by $S_i$.

Hence, the "hairstyleAnchors" attribute can be specified as an array of 4-tuples: $(t_i, u_i, v_i, w_i)$, specifying an anchor location using barycentric coordinates $(ui, vi, wi)$ inside a triangle whose index in the mesh is $t_i$. Alternatively, the "hairstyleAnchors" can be specified as the index of an accessor in the accessors array that points to a buffer holding the above-referenced array of 4-tuples.

The properties of the "MPEG_node_strand_hairstyle" extension described above may be embedded in an "MPEG_node_avatar" extension that describes an avatar. The hairstyle described by these properties is then bound to the avatar referenced by "MPEG_node_avatar." Advantageously, the properties may be wrapped in an object that becomes a new property of "MPEG_node_avatar." This object may be named, for instance, "strand_hairstyle." In this aspect, the "avatarFormat" property of the "landmarks" object in "strand_hairstyle" is removed as it is redundant with the "type" property of the embedding "MPEG_node_avatar." Furthermore, the "avatarLandmarkSet" and the "avatarAnchors" properties of the "landmarks" object are replaced by an "avatarAnchors" property that specifies, as an array of integers, the indices of the vertices of the avatar mesh that define anchor positions on the avatar head. This avatar mesh is referenced by the "mesh" property of the "node" object extended by "MPEG_node_avatar."

The "MPEG_node_strand_hairstyle" extension described above may include an additional "avatar" property that specifies the target avatar on which the hairstyle is to be bound. The "avatar" property is defined as the index, in the "nodes" array of the scene description, of the node describing the target avatar. The node indexed by the "avatar" property has an "MPEG_node_avatar" extension. In this aspect, the "avatarFormat" property of the "landmarks" object in "MPEG_node_strand_hairstyle" can be removed as it is redundant with the "type" property of the "avatar" object. Furthermore, the "avatarLandmarkSet" and the "avatarAnchors" properties of the "landmarks" object are replaced by an "avatarAnchors" property that specifies as an array of integers the indices of the vertices of the target avatar mesh that define anchor positions on the avatar mesh. The target avatar mesh is referenced by the "mesh" property of the "avatar" node.

Following is an example for a scene description (MPEG-I SD format compliant) that describes the properties of a strand-based hairstyle model, as disclosed herein. This description includes references to data buffers that, for clarity, are not included in the text. The scene contains a single root node named "mullet_strand_hairstyle_node" that describes the strand-based hairstyle model. The scene does not contain any reference to the instance of the target avatar to which the hairstyle is to be bound, as the description of the hairstyle is independent of this avatar instance.

An example of scene description, MPEG-I SD compliant.

```
{
  "scene": 0,
```

```
"scenes": [
  {
    "nodes": [0]
  }
],

"meshes": [
  {
    "name": "mullet_strand_hairstyle_mesh",
    "primitives": [
      {
        "attributes":
          {
            "POSITION": 0,
            "TEXCOORD_0": 1
          },
        "indices": 2,
        "mode": 3
      },
      {
        "attributes":
          {
            "POSITION": 3,
            "TEXCOORD_0": 4
          },
        "indices": 5,
        "mode": 3
      },
      {
        "attributes":
          {
            "POSITION": 6,
            "TEXCOORD_0": 7
          },
        "indices": 8,
        "mode": 3
      }
    ],
  },
  {
    "name": "mullet_hairstyle_supporting_mesh",
    "primitives": [
      {
        "attributes":
          {
            "POSITION": 9
          },
        "indices": 10,
        "mode": 4
      }
    ],
```

```
      }
    ],

    "nodes": [
      {
        "name": "mullet_strand_hairstyle_node",
        "mesh": 0,
        "extensions": {
          "MPEG_node_strand_hairstyle": {
            "avatar": 0,
            "supportingMesh": 1,
              "rootToTip": true,
              "landmarks": {
                "avatarFormat": "urn:my_avatar_format",
                "avatarLandmarkSet": "scalp landmarks",
                "avatarAnchors": [30, 17, 19, 21, 2, 24, 26, 18],
                "hairstyleAnchors": [154, 33, 867, 441, 3, 274, 116, 667]
            }
          }
        }
      }
    ],

    "extensionsUsed": [
        "MPEG_node_strand_hairstyle"
    ],

    "extensionsRequired": [
        "MPEG_node_strand_hairstyle"
    ],
    "asset": {
        "version": ["2.0"]
    }
}
```

The "mesh" property of "mullet_strand_hairstyle_node" references the "mesh" object named "mullet_strand_hairstyle_mesh" through its index in the "meshes" array, which is equal to 0 in the example description as this mesh is the first element in the array. This "mesh" object specifies the hairstyle model as a set of polyline primitives, each polyline defines a 3D curve representing a hair strand. Accordingly, the "mode" attribute of its primitives is set to 3, the value associated with the LINE_STRIP topology type, to indicate that its primitives are line strips. For clarity, this example for scene description is limited to three curve primitives. Their geometries are specified in the buffers referenced by the POSITION accessors indexed by 0, 3 and 6 in the "accessors" array. This array and its content are not represented in the example description.

Hence, the node named "mullet_strand_hairstyle_node" describes a strand-based hairstyle model that is extended herein by an "MPEG_node_strand_hairstyle" extension. This extension contains the following properties.

The "supportingMesh" property refers to the "mesh" object named "mullet_hairstyle_supporting_mesh" that describes the hairstyle supporting mesh. This mesh is specified through its index in the "meshes" array, which is equal to 1 in the example description as this mesh is the second element in the array.

The "rootToTip" property, set to "true" in the example description, specifies that the vertices of a polyline, defining a 3D curve representing a hair strand, are ordered starting with the root and ending with the tip of the strands. The coordinates of these vertices are stored in the buffers referenced by the POSITION attributes of the primitives of the mesh named "mullet_strand_hairstyle_mesh."

The "landmarks" property describes a "HairstyleLandmarks" object (shown in Table 2). It specifies a set of anchor locations on the mesh of a target avatar and a corresponding set of anchor locations on the hairstyle supporting mesh. The locations on the hairstyle supporting mesh are described as a list of vertices of the hairstyle supporting mesh; the "hairstyleAnchors" property specifies the indices of these vertices. The anchor locations on the mesh of the target avatar to which the hairstyle is to be bound (fitted) are described with respect to an avatar representation format specified by the "avatarFormat" property.

Like the "type" property of the "MPEG_node_avatar" extension of MPEG-I SD, "avatarFormat" is a string that references the URN where the avatar representation format is described. The avatar representation scheme defined by "avatarFormat" may contain several sets of landmarks. Each set may be described as a numbered set of vertices on a template avatar mesh, as for the facial landmarks defined in the MPEG-I SD reference avatar model. The "avatarLandmarkSet" property specifies the name of the relevant landmark set (e.g., the set referring to scalp landmarks). The "avatarAnchors" specifies the indices of the landmarks corresponding to the anchors on the hairstyle supporting mesh defined by "hairstyleAnchors." The "avatarAnchors" and the "hairstyleAnchors" arrays have the same number of elements and are index-aligned. For instance, the description indicates that the third anchor location on the hairstyle supporting mesh, defined by the vertex whose index is 867, matches the landmark indexed by 19 in the landmark set named "scalp landmarks" of the avatar representation scheme referenced by URN "um:my_avatar_format."

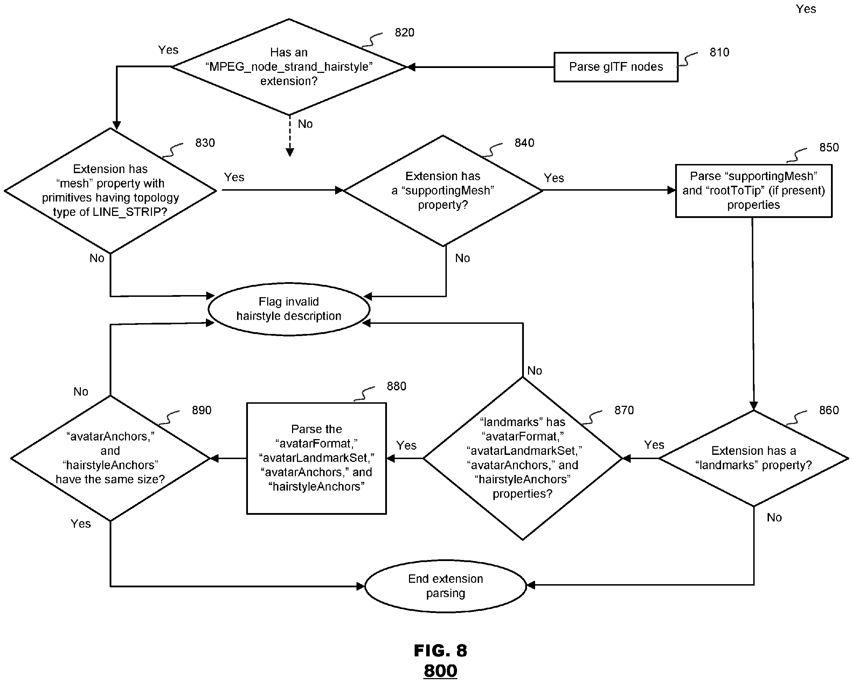

FIG. 8 is a flow diagram of an example method for the parsing of the "MPEG_node_strand_hairstyle" extension 800. In the example of FIG. 8, a scene description, containing a node extended by "MPEG_node_strand_hairstyle," is parsed. First, in step 810, the node array (containing glTF nodes) of the scene description is located and each node therein is parsed according to steps 820-890. In step 820, if a parsed node is detected to not have an "MPEG_node_strand_hairstyle" extension, further parsing, not described herein, is performed (as indicated by the dashed arrow). Else, the parsing proceeds to step 830, where it is checked for the extension of the node identified in step 820 whether the extension has a "mesh" property and if the primitives of the "mesh" objects referenced by this property have a topology type (as defined by their "mode" property) set to LINE_STRIP. If not, the description of the node is flagged as invalid. Else, the parsing proceeds to step 840, where it is checked whether the extension has a "supportingMesh" properties. If not, the description of the extension is flagged as invalid. Else, the parsing proceeds to step 850, where the "supportingMesh" and optionally the "rootToTip" properties of the extension are parsed. In step 860, it is checked whether the extension has a "landmarks" property. If not, the parsing ends successfully. If the "landmarks" property is present, in step 870 it is checked whether the "HairstyleLandmarks" object referenced by the "landmarks" property has an "avatarFormat" property, an "avatarLandmarkSet" property, an "avatarAnchors" property, and a "hairstyleAnchors" property. If not, the description of the extension is flagged as invalid. Else, in step 880 the "avatarFormat," the "avatarLandmarkSet," the "avatarAnchors," and the "hairstyleAnchors" properties are parsed. In step 890, it is further checked whether the array referenced by the "avatarAnchors" and the array referenced by the "hairstyleAnchors" properties have the same size. If not, the description of the extension is flagged as invalid. Else, the parsing ends successfully.

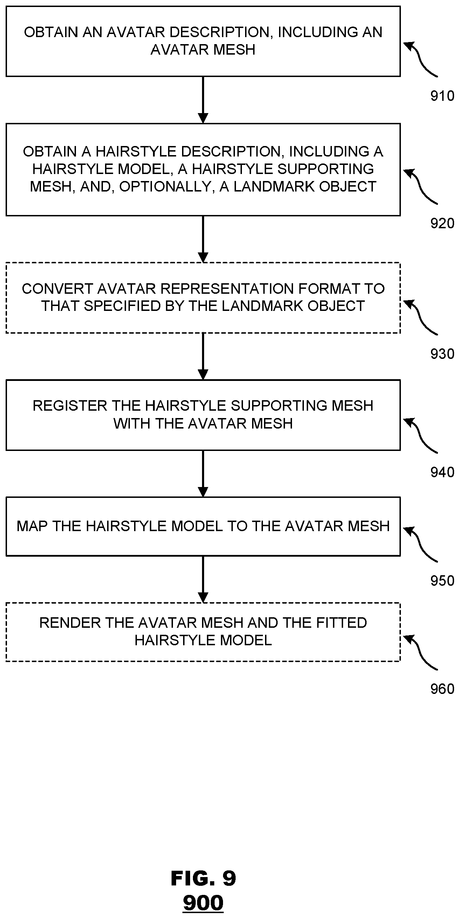

FIG. 9 is a flow diagram of an example method for fitting a hairstyle model to an avatar to be rendered 900. It is assumed that a user of a virtual world platform is represented by an avatar, described by an avatar mesh created by the platform. To customize the appearance of the avatar, the user can select a hairstyle out of a catalog of hairstyles proposed by the platform. The extended hairstyle description, according to aspects, allows to bind (fit) the selected hairstyle to the avatar mesh, as described next in reference to FIG. 9.

In step 910, an avatar description is obtained, including an avatar mesh that represents an avatar (e.g., proxy for the user). The avatar description may conform to an avatar representation format, provided for example as a URN as defined by the "type" property of the "MPEG_node_avatar" extension of MPEG-I SD.

In step 920, a hairstyle description is obtained, including a hairstyle model (e.g., of a hairstyle selected by a user from a catalog of hairstyles), a hairstyle supporting mesh, and optionally, a landmark object (e.g., as described in Table 2). Note that the representation format followed by the avatar description (obtained in step 910) may include a specification of corresponding landmarks on the hairstyle supporting mesh and on the scalp region (or a target region) of an avatar mesh. In this case, the landmarks on the scalp region of an avatar mesh are specified with respect to an avatar representation format.

In step 930, if necessary, the avatar representation format, provided by the avatar description, may be converted to the avatar representation format specified by the landmark object that may have been obtained with the hairstyle description. To that end, in the case where a landmark object is obtained with the hairstyle description, then if the avatar description conforms to a specified first avatar representation format and if that first avatar representation format is different from a second avatar representation format specified by the "avatarFormat" property of the landmark object, then the avatar landmarks are mapped to follow the second avatar representation format, using a format mapping tool. This format mapping tool may implement a shape matching method.

In step 940, the hairstyle supporting mesh (provided by the hairstyle description is step 920) is registered with the avatar mesh (provided by the avatar description in step 910). To that end, a mesh registration tool can be applied (internally or externally to the platform), for example as described above with respect to equations (1) and (2), to obtain corresponding locations on the avatar mesh for the strand root locations on the hairstyle supporting mesh. If a landmark object is obtained with the hairstyle description in step 920, then landmarks on the avatar mesh (as indexed by avatarAnchors of Table 2) and corresponding landmarks on the hairstyle supporting mesh (as indexed by hairstyleAnchors of Table 2) may be used to facilitate the registration.

In step 950, the hairstyle model is mapped to the avatar mesh. That is, the strands (or the guide curves) of the hairstyle are spatially mapped to the avatar mesh, using the correspondences obtained by the registration process in step 940, so that respective roots (on the hairstyle supporting mesh) are spatially fitted (anchored) to their corresponding locations on the avatar mesh.

Then, in step 960, the avatar (described by the avatar description obtained in step 910) with the fitted hairstyle model may be rendered. In an aspect, if the fitted hairstyle model includes fitted guide curves, then additional hair strands can be interpolated relative to the fitted guide curves.

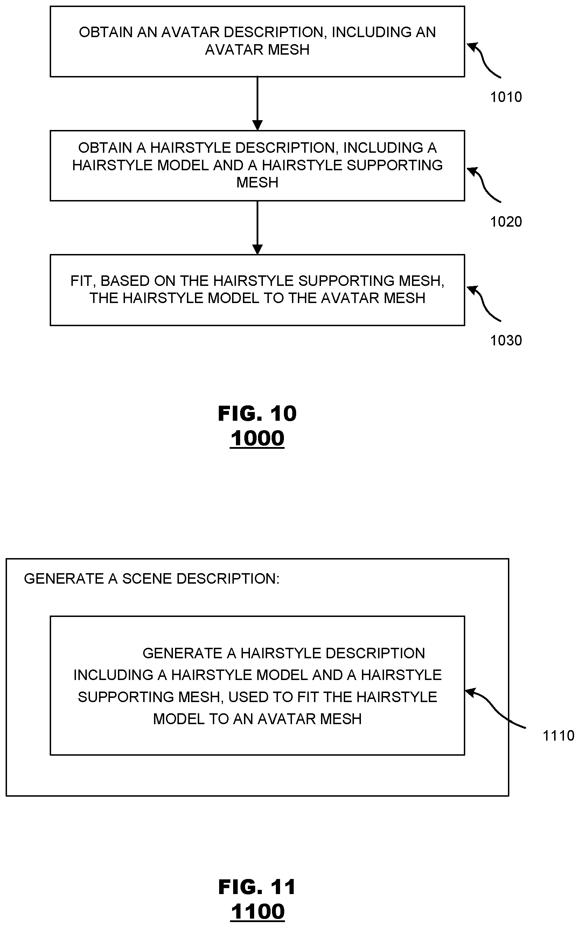

FIG. 10 is a flow diagram of an example method for fitting a hairstyle model to an avatar 1000, according to aspects of the present disclosure. The method 1000 begins, in step 1010, with obtaining an avatar description that includes an avatar mesh. In step 1020, a hairstyle description is obtained that includes a hairstyle model and a hairstyle supporting mesh. Based on the hairstyle supporting mesh, in step 1030, the hairstyle model is fitted to the avatar mesh. Following the application of method 1000, the avatar mesh and the fitted hairstyle model may be rendered. As described herein, the fitting of the hairstyle model to the avatar mesh can be accomplished by registering the hairstyle supporting mesh with the avatar mesh and by mapping hair strands defined by the hairstyle model to the avatar mesh based on that registration. Thus, before the fitting, roots of hair strands defined by the hairstyle model are anchored at a first set of locations on the hairstyle supporting mesh; and, after the fitting, the roots of hair strands are anchored at a second set of locations on the avatar mesh. In an aspect, the hairstyle model defines guide curves representing hair strands. In this case, the guide curves may be first fitted to the avatar mesh, and then other hair strands may be interpolated relative to the fitted guide curves.

According to aspects, the method 1000, as part of the hairstyle description, may obtain a first set of landmarks located on the avatar mesh and a second set of landmarks located on the hairstyle supporting mesh, where landmarks of the second set respectively correspond to landmarks of the first set, and where the fitting of the hairstyle model to the avatar mesh is based on the corresponding landmarks in the first and in the second sets. In an aspect, each landmark in the second set is specified by barycentric coordinates and by an index identifying a triangle in the hairstyle supporting mesh that the landmark resides in (e.g., as described in reference to FIG. 7).

FIG. 11 is a diagram of an example method for generating a scene description 1100, according to aspects of the present disclosure. The method 1100 includes generating a hairstyle description, including a hairstyle model and a hairstyle supporting mesh that can be used to fit the hairstyle model to an avatar mesh 1110 (e.g., as demonstrated herein by the example of scene description, MPEG-I SD compliant). According to aspects, the hairstyle supporting mesh can be used to fit the hairstyle model to an avatar mesh representing the avatar (e.g., as demonstrated with respect to FIG. 9 and FIG. 10). The generated hairstyle description may further include a property indicating a reference to the avatar mesh. The generated hairstyle description may further include a property indicating whether vertices of each hair strand, defined by the hairstyle model, are ordered starting with the root and ending with the tip (see "rootToTip" in Table 1). The generated hairstyle description may further include a landmark property (see "landmarks" in Table 1).

According to aspects, the landmark property may contain a first set of landmarks located on the avatar mesh (see "avatarAnchors" in Table 2) and a second set of landmarks located on the hairstyle supporting mesh (see "hairstyleAnchors" in Table 2) that provide correspondence between the meshes. That is, landmarks of the second set respectively correspond to landmarks of the first set, where the corresponding landmarks in the first and the second sets may be used for the fitting of the hairstyle model to the avatar mesh. In an aspect, the landmark property may further contain a property indicating an avatar format including sets of landmarks (see "avatarFormat" in Table 2). In another aspect, the landmark property may further contain a property indicating an avatar landmark set that identifies a set of the avatar format that is referenced to by the first set of landmarks (see "avatarLandmarkSet" in Table 2).

The method 1100 can be applied to encode the scene description according to glTF. The encoded scene description may include the "MPEG_node_strand_hairstyle" extension, described herein, that may be parsed as demonstrated in FIG. 8.

The illustrations of the aspects described herein are intended to provide a general understanding of the structure, function, and operation of the various aspects. The illustrations are not intended to serve as a complete description of all of the elements and features of apparatuses and systems that utilize the structures or methods described herein. Many other aspects may be apparent to those of skill in the art upon reviewing the disclosure. Other aspects may be utilized and derived from the disclosure, such that structural and logical substitutions and changes may be made without departing from the scope of the disclosure. Accordingly, the disclosure and the figures are to be regarded as illustrative rather than restrictive.

The description of the aspects is provided to enable the making or use of the aspects. Various modifications to these aspects will be readily apparent, and the generic principles defined herein may be applied to other aspects without departing from the scope of the disclosure. Thus, the present disclosure is not intended to be limited to the aspects shown herein but is to be accorded the widest scope possible consistent with the principles and novel features as defined by the following claims.

**Claims**

1. A method for fitting a hairstyle model to an avatar, comprising:

   obtaining an avatar description, including an avatar mesh;
   obtaining a hairstyle description, including a hairstyle model and a hairstyle supporting mesh; and
   fitting, based on the hairstyle supporting mesh, the hairstyle model to the avatar mesh.

2. An apparatus for fitting a hairstyle model to an avatar, comprising:

   at least one processor; and
   memory storing instructions that, when executed by the at least one processor, cause the apparatus to:

      obtain an avatar description, including an avatar mesh,
      obtain a hairstyle description, including a hairstyle model and a hairstyle supporting mesh, and
      fit, based on the hairstyle supporting mesh, the hairstyle model to the avatar mesh.

3. The method according to claim 1 or the apparatus according to claim 2, wherein the fitting comprises:

   registering the hairstyle supporting mesh with the avatar mesh; and
   based on the registration, mapping hair strands defined by the hairstyle model to the avatar mesh.

4. The method according to claim 1 or 3 or the apparatus according to claim 2 or 3, wherein the obtaining of the hairstyle description comprises:

   obtaining a first set of landmarks located on the avatar mesh; and
   obtaining a second set of landmarks located on the hairstyle supporting mesh that respectively correspond to the landmarks of the first set,
   wherein the fitting is based on the corresponding landmarks in the first and the second sets.

5. The method according to claim 4 or the apparatus according to claim 4, wherein each landmark in the second set is specified by barycentric coordinates and by an index identifying a triangle in the hairstyle supporting mesh that the landmark resides in.

6. The method according to any one of claims 1 and 3-5 or the apparatus according to any one of claims 2-5, wherein the hairstyle model defines guide curves representing hair strands, and wherein the fitting comprises:

   fitting the guide curves to the avatar mesh; and
   interpolating other hair strands relative to the fitted guide curves.

7. The method according to any one of claims 1 and 3-6 further comprising, or the apparatus according to any one of claims 2-6 wherein the instructions further cause the apparatus to perform:
   rendering of the avatar mesh and of the fitted hairstyle model.

8. A method for generating a scene description, comprising:

   generating a hairstyle description, including a hairstyle model and a hairstyle supporting mesh,
   wherein the hairstyle supporting mesh is used to fit the hairstyle model to an avatar mesh representing an avatar.

9. An apparatus for generating a scene description, comprising:

   at least one processor; and
   memory storing instructions that, when executed by the at least one processor, cause the apparatus to:

      generate a hairstyle description, including a hairstyle model and a hairstyle supporting mesh,

wherein the hairstyle supporting mesh is used to fit the hairstyle model to an avatar mesh representing an avatar.

10. The method according to claim 8 or the apparatus according to claim 9, wherein the hairstyle description further includes a property indicating a reference to the avatar mesh.

11. The method according to claim 8 or 10 or the apparatus according to claim 9 or 10, wherein the hairstyle description further includes a property indicating whether vertices of each hair strand, defined by the hairstyle model, are ordered starting with the root of the hair strand and ending with the tip of the hair strand.

12. The method according to any one of claims 8 and 10-11 or the apparatus according to any one of claims 9-11, wherein the hairstyle description further includes a landmark property containing:

   a first set of landmarks located on the avatar mesh; and
   a second set of landmarks located on the hairstyle supporting mesh that respectively correspond to the landmarks of the first set,
   wherein the corresponding landmarks in the first and the second sets are further used to fit the hairstyle model to the avatar mesh.

13. The method according to claim 12 or the apparatus according to claim 12,
   wherein the landmark property further contains a property indicating an avatar format including sets of landmarks.

14. The method according to claim 13 or the apparatus according to claim 13,
   wherein the landmark property further contains a property indicating an avatar landmark set, the avatar landmark set identifies a set of the avatar format that is referenced to by the first set of landmarks.

15. The method according to any one of claims 8 and 10-14 further comprising or the apparatus according to any one of claims 9-14 wherein the instructions further cause the apparatus to perform:
   encoding the scene description according to a graphics library transmission format (glTF).

FIG. 1
100

FIG. 2
200

Mesh M

Mesh M'

EP 4 660 952 A1

**FIG. 3**
**300**

FIG. 4
400

**FIG. 5**
**500**

**FIG. 6**
**600**

**FIG. 7**
**700**

**FIG. 8**
**800**

OBTAIN AN AVATAR DESCRIPTION, INCLUDING AN AVATAR MESH

910

OBTAIN A HAIRSTYLE DESCRIPTION, INCLUDING A HAIRSTYLE MODEL, A HAIRSTYLE SUPPORTING MESH, AND, OPTIONALLY, A LANDMARK OBJECT

920

CONVERT AVATAR REPRESENTATION FORMAT TO THAT SPECIFIED BY THE LANDMARK OBJECT

930

REGISTER THE HAIRSTYLE SUPPORTING MESH WITH THE AVATAR MESH

940

MAP THE HAIRSTYLE MODEL TO THE AVATAR MESH

950

RENDER THE AVATAR MESH AND THE FITTED HAIRSTYLE MODEL

960

**FIG. 9**
**900**

OBTAIN AN AVATAR DESCRIPTION, INCLUDING AN
AVATAR MESH

1010

OBTAIN A HAIRSTYLE DESCRIPTION, INCLUDING A
HAIRSTYLE MODEL AND A HAIRSTYLE SUPPORTING
MESH

1020

FIT, BASED ON THE HAIRSTYLE SUPPORTING MESH,
THE HAIRSTYLE MODEL TO THE AVATAR MESH

1030

**FIG. 10**
**1000**

GENERATE A SCENE DESCRIPTION:

GENERATE A HAIRSTYLE DESCRIPTION
INCLUDING A HAIRSTYLE MODEL AND A HAIRSTYLE
SUPPORTING MESH, USED TO FIT THE HAIRSTYLE
MODEL TO AN AVATAR MESH

1110

**FIG. 11**
**1100**

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PATRICE RONDAO ALFACE ET AL: "[V-DMC][NEW] On the support of lines in V-DMC", 145. MPEG MEETING; 20240122 - 20240126; ONLINE; (MOTION PICTURE EXPERT GROUP OR ISO/IEC JTC1/SC29/WG11), , no. m66304 17 January 2024 (2024-01-17), XP030315660, Retrieved from the Internet: URL:https://dms.mpeg.expert/doc_end_user/documents/145_OnLine/wg11/m66304-v1-m66304_support_polylines.zip [retrieved on 2024-01-17] * figures 1,2,3,4 * * section "introduction", pages 1 to 3 * * section "support of polylines in file formats and rendering" * * section "glTF, Waveefront OBJ, MPEG-4 Part 16 AFX" * | 1-15 | INV. G06T13/40 G06T19/20 |
| X | NUTTAPON VANAKITTISTIEN ET AL: "Game-ready 3D hair model from a small set of images", COMPUTER ANIMATION AND VIRTUAL WORLDS, JOHN WILEY & SONS LTD, GB, vol. 30, no. 2, 5 July 2018 (2018-07-05), page n/a, XP072314798, ISSN: 1546-4261, DOI: 10.1002/CAV.1855 * figures 1, 4, 7 to 12 * * section 3.1.3 * * section 3.3.1 * * section 3.4 * | 1-15 | TECHNICAL FIELDS SEARCHED (IPC)  G06T |

-/--

The present search report has been drawn up for all claims

| Place of search | Date of completion of the search | Examiner |
|---|---|---|
| Berlin | 17 October 2024 | Gauthier, J |

page 1 of 2

Europäisches
Patentamt

European
Patent Office

Office européen
des brevets

**EUROPEAN SEARCH REPORT**

Application Number

EP 24 30 5876

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Morand Gaelle ET AL: "GROOMING FOR REAL-TIME REALISM: HAIR AND FUR WITH UNREAL ENGINE", White paper, 27 April 2021 (2021-04-27), pages 1-34, XP093023876, Retrieved from the Internet: URL:https://www.unrealengine.com/en-US/blog/realistic-hair-and-fur-with-unreal-engine-get-the-white-paper [retrieved on 2023-02-14] * figures 2,3,4,5,10,11,12 * * section "Hair and fur in DCC applications", pages 5 to 9 * * section "Groom asset editor", pages 11 to 12 * * section "surface attachment", pages 12 to 13 * ----- | 1-15 | |
| A | AVRIL QUENTIN ET AL: "MORGAN: MPEG Original Reference Geometric Avatar Neutral", 29TH ACM SYMPOSIUM ON VIRTUAL REALITY SOFTWARE AND TECHNOLOGY, ACMPUB27, NEW YORK, NY, USA, 9 October 2023 (2023-10-09), pages 1-10, XP059457233, DOI: 10.1145/3611314.3615909 ISBN: 979-8-4007-0328-7 * the whole document * ----- | 1-15 | TECHNICAL FIELDS SEARCHED (IPC) |

The present search report has been drawn up for all claims

| Place of search | Date of completion of the search | Examiner |
|---|---|---|
| Berlin | 17 October 2024 | Gauthier, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **N. VERMA et al.** FeaStNet: Feature-Steered Graph Convolutions for 3D Shape Analysis. *2018 IEEE International Conference on Computer Vision and Pattern Recognition*